(19) Europäisches Patentamt

European Patent Office

Office européen des brevets

(11) **EP 4 625 166 A1**

(12) **EUROPEAN PATENT APPLICATION**

(43) Date of publication:
01.10.2025 Bulletin 2025/40

(21) Application number: 25164746.7

(22) Date of filing: 19.03.2025

(51) International Patent Classification (IPC):
*G06F 9/455* (2018.01)    *G06F 8/60* (2018.01)

(52) Cooperative Patent Classification (CPC):
**G06F 8/60; G06F 9/45558;** G06F 2009/45595

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 25.03.2024  US 202463569262 P
05.03.2025  US 202519070726

(71) Applicant: **Dynatrace LLC**
**Waltham, MA 02451 (US)**

(72) Inventor: **Gierlinger, Markus**
**Linz (AT)**

(74) Representative: **Bittner, Thomas L. et al**
**Boehmert & Boehmert**
**Anwaltspartnerschaft mbB**
**Pettenkoferstrasse 22**
**80336 München (DE)**

(54) **EXPLORING THE NETWORK CONFIGURATION OF KUBERNETES CLUSTERS**

(57) The present disclosure relates to a computer-implemented method for deploying software by analyzing a manifest describing a portion of the network topology in a distributed computing environment. The objective of the disclosure is to find methods for deploying software in the distributed computing environment comprising the automatic or semi-automatic analysis of the network topology in the computing environment. This is solved by receiving the manifest; extracting all pods enumerated in the manifest; for all pods, determining the communication relationship between a given pod and another pod in the manifest; logging the communication relationship between the given pod and the another pod; and displaying the communication relationship between the given pod and the another pod on a display device. (Fig. 1a)

Fig. 1a

EP 4 625 166 A1

**Description**

<u>Field</u>

The present disclosure relates to the field of information technology. In particular, the disclosure relates to a computer-implemented method for deploying software in a distributed computing environment comprising exploring the network configuration by analyzing the manifest.

<u>Background</u>

The network configuration of a distributed computing environment such as a Kubernetes cluster is specified in the manifest. The manifest comprises one or multiple text files which specify, inter alia the allowed and disallowed connections between Kubernetes resources, i.e., containers, pods, namespaces... in the cluster. Pods are collections of closely related or tightly coupled containers. In Kubernetes, a pod is a single container or a group of containers that are tightly coupled and scheduled together. Pods share the same network and storage resources and are managed as a single unit. Containers are packages of applications and execution environments. They are a means of packing up an application or service and everything required for it to run, regardless of environment, in a single place. Furthermore, nodes are computing resources that house pods to execute workloads. A node is the smallest unit of computing hardware in Kubernetes. It is a representation of a single machine in a cluster, i.e. a virtual or physical machine, depending on the cluster.

In the prior art, the analysis of Kubernetes cluster is done by specialized IT engineers, sometimes called Kubernetes experts. Such experts review the manifest of a Kubernetes cluster and derive the network topology indicating which Kubernetes resources are allowed to communicate with each other. In case of complicated clusters such work takes rather long and is prone to errors. How the analysis of the network topology of Kubernetes clusters can be done automatically or at least semi-automatically is not known in the art.

This section provides background information related to the present disclosure which is not necessarily prior art.

<u>Summary</u>

The objective of the disclosure is to find a computer-implemented method for deploying software in a distributed computing environment comprising the automatic or semi-automatic analysis of the network topology in the distributed computing environment, e.g., in a Kubernetes clusters. The method shall allow the quick and error-free analysis of complex network topologies.

This objective is solved a computer-implemented method for deploying software in a distributed computing environment according to claim 1. Advantageous embodiments are described in the dependent claims.

In particular, claim 1 is directed to a computer-implemented method for deploying software in a distributed computing environment, comprising: receiving, by a computer processor, a manifest from a container orchestration system, where the manifest describes a portion of network topology in the distributed computing environment; extracting, by the computer processor, pods enumerated in the manifest, where a pod specifies a container or group of containers in the network topology; for a given pod in the manifest, determining, by the computer processor, whether the given pod is able to communicate with another pod in the manifest, thereby defining a communication relationship between the given pod and the another pod; logging, by the computer processor, the communication relationship between the given pod and the another pod in a data store; and displaying, by the computer processor, the communication relationship between the given pod and the another pod, on a display device.

In a first step, the manifest of a container orchestration system, such as a Kubernetes cluster, is received by a computer processor, e.g., by reading in the manifest. The manifest typically consists of one or multiple YAML files. A YAML file is a human-readable text file in YAML format, where YAML is a data serialization language that is often used for writing configuration files, such as Kubernetes clusters. In the next step, the manifest is parsed by the processor and all pods comprised in the cluster are extracted from the manifest. After extracting all pods, and optionally identifying active pods in the cluster, the communication relationship between a given pod and another pod in the portion of network topology to be investigated is determined. The communication relationship defines single- or bi-directional communication paths where network communication between pods is allowed. Allowed network communication includes intra- and inter-pod communication. It is not necessary that any actual communication between pods takes place as the communication relationship is concerned with possible communication paths between pods only. The communication relationships between pods are logged in a data store and displayed on a display device such as a screen.

Pods enumerated in the manifest are typically extracted by parsing the text of the manifest.

Preferably, the manifest is formatted in a human-readable data serialization language, e.g., as a YAML or JSON file.

In order to determine the communication relationship between pods for a portion of the network topology or the entire network topology in the distributed computing environment, the method determines for each pair of pods extracted from the manifest whether the given pod is able to communicate with another pod by applying a predefined rule to each of the pair of pods. Doing so, systematically determines the communication relationship between pods.

Typically, not just pods are identified by text parsing the manifest but also other types of Kubernetes resources, such as containers, namespaces, network policies, services, nodes, de-ployments, replica sets, daemon sets, stateful sets etc. For this, the key "spec.template" may be used.

Pods are identified by parsing the manifest for the key-value pair "kind: Pod". The name of the pod is contained in the pod's configuration after the key "metadata.name". Namespaces are identified by parsing for "kind: Namespace". The name of the namespace is contained in the namespace's configuration after the key "metadata.name".

The configuration of Kubernetes entities can be done in a single YAML file by separating the entities by "---" from each other or by using separate YAML files. Also the combination of both is allowed, e.g. to put the configuration of multiple entities in a first YAML file and to specify at least a second YAML file.

For several Kubernetes resources not just the name of the resource can be specified in the manifest but also the role of the resource, e.g. by setting a value for the key "metadata.labels.role" in case of pods.

As noted above, by default all active pods in a cluster are allowed to communicate with each other. Although this behavior ensures good connectivity in the cluster, it poses some risk since in case one resource is vulnerable, such vulnerability is not just limited to the respective entity, but all other entities can be compromised by attacking the vulnerable entity first and then to access other entities that are allowed to communicate with the vulnerable entity. One way to remedy this is by specifying network policies in the cluster. It is noted that network policies sometimes require a Container Network Interface (CNI) plugin. Subsequently, it will be assumed that network policies are supported.

Preferably, network policies enumerated in the manifest are extracted by text parsing the manifest, where a network policy specifies traffic flow between entities in the network topology.

Generally, the network policy specifies at least one of a given network entity cannot send network traffic or the given network entity cannot receive network traffic. Alternatively or in addition to the aforementioned, the network policy specifies at least one of a given network entity that can send network traffic or the given network entity that can receive network traffic. In other words, a given network policy either modifies the communication relationship between the given pod and the another pod.

Preferably, the network policy specifies at least one of a given network entity cannot send network traffic or the given network entity cannot receive network traffic, or specifies at least one of a given network entity can send network traffic or the given network entity can receive network traffic.

According to an advantageous embodiment of the disclosure, all network policies in the network topology are extracted by text parsing the manifest. Since multiple network policies can be defined for a cluster and the effect of network policies is superimposed on each other, for each network policy first the subjects are extracted, where a subject is a Kubernetes entity to which the network policy applies directly. After identifying the subject or the subjects defined by the network policy, the effect of policy types, and Ingress rules and/or Egress rules on the network connectivity is evaluated. In case the network policy specifies Ingress as policy type or if the network policy does not specify any policy type, communication from a peer to the subject is disallow, where peer ≠ subject. In case the network policy specifies Egress as policy type, communication from the subject to a peer is disallowed, where subject ≠ peer. In case the network policy specifies an Ingress rule, communication from the peers specified at "networkPolicy.spec.ingress.from" to the subject is allowed. Finally, if the network policy specifies an Egress rule, communication from the subject to the peers specified at "networkPolicy.spec.egress.to" is allowed.

Network policies are identified by parsing the manifest for the key-value pair "kind: Network-Policy". The name of the respective network policy is contained in the key "metadata.name".

In a network policy, subjects are specified by at least one of a pod selector, a namespace selector, and an IP block. Also peers are specified by at least one of a pod selector, a namespace selector, and an IP block.

According to a beneficial embodiment, the computer processor displays a graphical representation of the portion of the network topology described in the manifest on a display device.

In the application examples, logical relations also referred to as rules or equations are introduced to identify Kubernetes entities, to derive the scope of Kubernetes entities, to explore the connectivity of Kubernetes entities in the cluster, to evaluate the effect of network policies etc.

Although such relations are introduced by way of example, these relations are not limited to the specific example but remain valid for all possible configurations of Kubernetes clusters.

In a preferred embodiment of the disclosure, the method not just analyzes but also modifies the communication relationship between the given pod and the other pod in accordance with the given network policy.

In a very beneficial embodiment of the disclosure, the computer processor compares the determined communication relationship between the given pod and the another pod to a reference communication relationship between the given pod and the another pod. In case the determined communication relationship differs from the reference communication relationship, the manifest is changed based on the result of the comparison such that the communication relationship between the given pod and the another pod for the changed manifest is in conformity with the reference communication relationship.

The objective technical problem is also solved by a non-transitory computer-readable medium according to another claim having computer-executable instructions. Preferred embodiments are described in the dependent claims.

In particular, the problem is solved by a non-transitory computer-readable medium having computer-executable instructions that, upon execution of the instructions by a processor of a computer, cause the computer to: receive a manifest from a container orchestration system, where the manifest describes a portion of network topology in the distributed computing environment; extract pods enumerated in the manifest, where a pod specifies a container or group of containers in the network topology; for a given pod in the manifest, determine whether the given pod is able to communicate with another pod in the manifest, thereby defining a communication relationship between the given pod and the another pod; log the communication relationship between the given pod and the another pod in a data store; and display the communication relationship between the given pod and the another pod, on a display device.

Data in the manifest may be formatted in accordance with a human-readable data serialization language.

The computer-executable instructions may further cause the computer to determine whether the given pod is able to communicate with another pod by enumerating each pair of pods extracted from the manifest and applying a predefined rule to each of the pair of pods.

The computer-executable instructions may further cause the computer to extract namespaces enumerated in the manifest by text parsing the manifest.

The computer-executable instructions may further cause the computer to extract network policies enumerated in the manifest by text parsing the manifest, where a network policy specifies traffic flow between entities in the network topology.

The computer-executable instructions may further cause the computer to, for a given network policy, modify the communication relationship between the given pod and the another pod in accordance with the given network policy.

The given network policy may specify at least one of a given network entity cannot send network traffic or the given network entity cannot receive network traffic.

The given network policy may specify at least one of a given network entity can send network traffic or the given network entity can receive network traffic.

The computer-executable instructions may further cause the computer to display a graphical representation of the portion of the network topology described in the manifest.

Further areas of applicability will become apparent from the description provided herein. The description and specific examples in this summary are intended for purposes of illustration only and are not intended to limit the scope of the present disclosure.

<u>Drawings</u>

The drawings described herein are for illustrative purposes only of selected embodiments and not all possible implementations, and are not intended to limit the scope of the present disclosure.

FIG. 1a — shows logical "holds" relations between pods and containers in a Kubernetes cluster for the first application example,

FIG. 1b — shows logical "can-reach" relations between a pod and containers held by another pod for the first application example,

FIG. 1c — shows logical "holds" and "can-reach" relations for the first application example,

FIG. 1d — shows configured communication paths between pods for the first application example,

FIG. 2 — shows configured communication paths between pods and namespaces for the second application example,

FIG. 3 — shows configured communication paths between pods and namespaces considering a network policy for the third application example,

FIG. 4 — shows configured communication paths between pods and namespaces considering a network policy for the fourth application example,

FIG. 5 — shows configured communication paths between pods and namespaces considering a network policy for the fifth application example,

FIGs. 6a, 6b — show a schematic of the involved relations in peer selection for a network policy for the sixth application example,

FIG. 7 — shows configured communication paths between pods and namespaces considering a network policy for the sixth application example,

FIG. 8 — shows a schema for the seventh application example, and

FIG. 9 — shows a schema for exposing workloads by Ingress.

Corresponding reference numerals indicate corresponding parts throughout the several views of the drawings.

Detailed description

Example embodiments will now be described more fully with reference to the accompanying drawings.

In a first application example, a simple Kubernetes cluster having the following manifest is analyzed:

```
apiVersion: v1
kind: Pod
metadata:
 name: frontend
 spec:
 containers:
- name: server
   image: nginx:latest
- name: logger
   image: busybox:latest
   ---
   apiVersion: v1
   kind: Pod
   metadata:
 name: backend
 spec:
 containers:
- name: api
   image: api:latest
```

*Listing 1: Manifest for first application example*

First, the manifest in Listing 1 is read in by a computer processor and all pods comprised in the cluster are extracted by text parsing. Pods are identified by the code "kind: Pod" in the manifest such that a first pod "frontend" is identified by the key-value pair "metadata.name: frontend" and a second pod "backend" is identified by the key-value pair "metadata.name: backend". In addition, containers for the respective pods are identified. The first pod "frontend" contains the containers "server" and "logger", and the second pod "backend" contains the container "api". Containers are identified in the manifest by the key "spec.containers". Note that a manifest is typically one or more YAML files, where YAML is a human-readable data serialization language that is often used for writing configuration files. In a YAML file, the point notation, e.g., as in "metadata.name:", is used to identify the hierarchical order of keys. In this case, the key "metadata:" is contained in the manifest and the key "name:" is a sub-key to the key "metadata:". The notation "metadata" dot "name" describes this hierarchy of keys in a compact expression.

The rule describing the logical "holds" relation between a pod and a container is

$$holds(p, c) = Pod(p) \wedge Container(c) \wedge c \in p.spec.containers \qquad (1)$$

The meaning of the relation "holds(p, c)" is that the pod "p" holds the container "c". Using this rule, e.g., a relation between the pod "frontend" and the pod "server" can be established by logical reasoning. For the pod and the container mentioned, Equ. 1 is *holds*(*frontend, server*) = *Pod*(*frontend*) ∧ *Container*(*server*) ∧ *server E frontend. spec. containers.* The type-relations *Pod*(*frontend*) and *Container*(*server*) return a Boolean true value if "frontend" is a pod and "server" is a container, respectively. Evaluating Equ. 1 returns "true", thus, the pod "frontend" holds/contains the container "server". The same holds true for holds(frontend, logger) and holds(backend, api).

The general rule for checking whether a container "x" in a pod "p" can reach another container "y" in the same pod (thus intra-pod communication) is

$$\text{can-reach}(x, y) = holds(p, x) \wedge holds(p, y) \wedge \neg(x = y) \qquad (2)$$

In other words, Equ. 2 forms a logical relation between two containers "x" and "y", whether the container "x" can reach the container "y". For the containers "server" and "logger", Equ. 2 reads can-reach(*server, logger*) = *holds*(*frontend, server*) ∧ *holds*(*frontend, logger*) ∧ ¬(*server = logger*) = *true*. Thus the container "server" can reach the container "logger" and vice versa.

Next, a relation is formed between the pod "backend" and the pod "frontend". The general rule for inter-pod communication is

*can-reach*(*src, dst*) = is-active-pod(*src*) ∧ is-active-pod(*dst*) ∧ ¬(*src* = *dst*) ∧ (¬(selected-by-egress-policy(*src*) ∧ selected-by-ingress-policy(*src*)) ∨ connection-allowed-by-network-policy(*src, dst*)) $\qquad$ (3)

The relation is-active-pod in Equ. 12

$$\text{is-active-pod}(p) = Pod(pod) \land (pod.status.phase = Running) \lor (\lnot(\exists pod.status))$$

$$(12)$$

returns a Boolean true value if the value for the key "pod.status.phase" is "Running" or if no key "pod.status" exists.

For the pods backend and frontend, Equ. 3 becomes

*can-reach*(*backend, frontend*)=is-active-pod(*backend*) ∧ *is-active-pod*(*frontend*) ∧ ¬(*backend = frontend*) ∧ (¬(selected-by-egress-policy (*backend*) ∧ selected-by-ingress-policy(frontend*)) ∨ connection-allowed-by-network-policy(*backend, frontend*)). As both pods are active and no network policy exists, Equ. 3 becomes can-reach(*backend, frontend*) = *true* ∧ *true* ∧ *true* ∧ (¬(*false* ∧ *false*) ∨ *false*) = *true*. Thus, the pod "backend" can reach the pod "frontend" and vice versa.

In addition, relations for the communication between a container and another pod, i.e. a pod different to the one holding the container, and a pod and another container are formulated. These general rules are:

$$\text{can-reach}(src, c) = holds(pod, c) \land \text{can-reach}(src, pod) \qquad (4)$$

$$\text{can-reach}(c, dst) = holds(pod, c) \land \text{can-reach}(pod, dst) \qquad (5)$$

These rules can be used, e.g., to check whether the pod "backend" can reach the container "server", Equ. 4 becomes *can-reach*(*backend, server*) = *holds*(*frontend, server*) ∧ *can-reach*(*backend, frontend*) = *true* ∧ *true* = *true*. Thus, the pod "backend" can reach the container "server". Checking the connection in the opposite direction, i.e. whether the container "server" can reach the pod "backend", Equ. 5 becomes *can-reach*(*server, backend*) = *holds*(*frontend, server*) ∧ can-reach(*frontend, backend*) = *true* ∧ *true* = *true*. Thus, also this connection is possible.

The configured connections for the Kubernetes cluster specified in Listing 1 are given in Tab. 1 below:

| | | Destination pods | |
|---|---|---|---|
| | | frontend | backend |
| Source pods | frontend | ✓ | ✓ |
| | backend | ✓ | ✓ |

*Tab. 1 Configured connections for Listing 1*

A check in the table, e.g., representing the configured connection from the source pod "frontend" to the destination pod "backend", denotes that such connection is possible in the given configuration. Conversely, an X in the table indicates that no such connection is configured. Note that the connections from and to the same pod, e.g., frontend-frontend and backend-backend, specify intra-pod connections, e.g. from one container held by the pod to another container held by the same pod. Such intra-pod connections are always allowed since a pod features just one network stack.

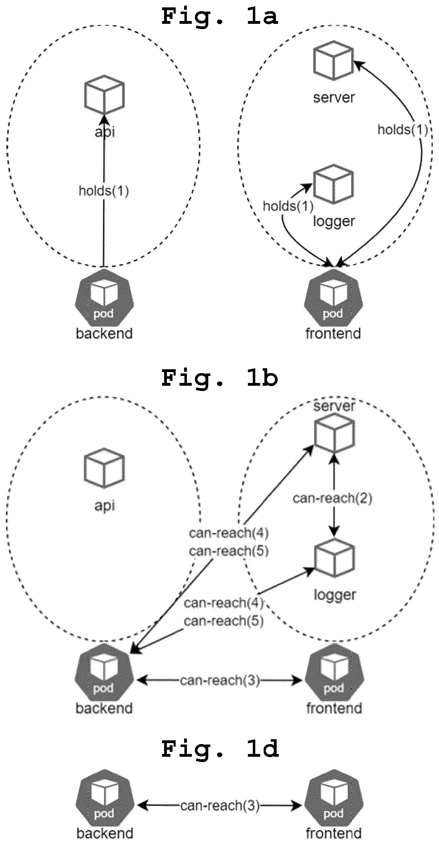

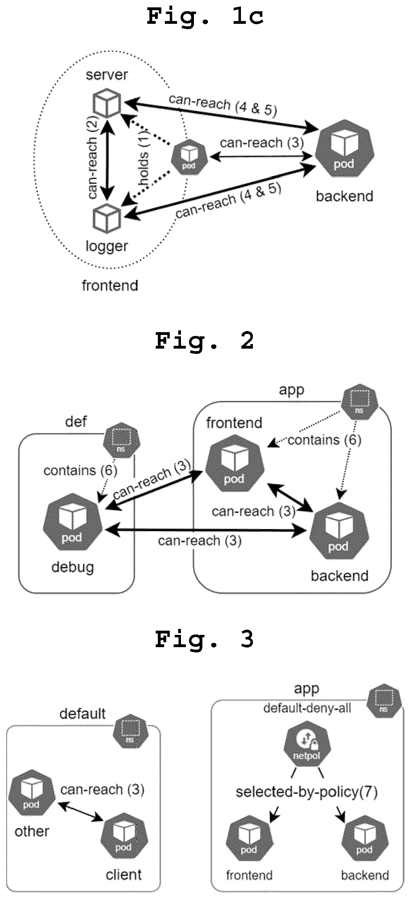

Intra-pod connections between pods and containers are shown in Fig. 1a, some inter-pod connections are shown in Fig. 1b, and the connections between pods are shown in Fig. 1d. Fig. 1c combines aspects from Figs. 1a and 1b in a single figure.

In a second application example, another simple Kubernetes cluster having the following manifest is analyzed:

```
apiVersion: v1
 kind: Namespace
 metadata:
```

```
name: def
---
apiVersion: v1
kind: Namespace
metadata:
name: app
---
apiVersion: v1
kind: Pod
metadata:
namespace: def
name: debug
spec:
containers:
- name: busybox
  image: busybox:latest
  ---
  apiVersion: v1
  kind: Pod
  metadata:
namespace: app
name: frontend
spec:
containers:
- name: server
  image: nginx:latest
  ---
  apiVersion: v1
  kind: Pod
  metadata:
name: backend
namespace: app
spec:
containers:
- name: backend
  image: api:latest
```

*Listing 2: Manifest for second application example*

In addition to rules 1-5 introduced above, Equ. 6 introduces a contains relation for describing whether a namespace "ns" contains a pod "p":

$$contains(ns, p) = Pod(p) \wedge Namespace(ns) \wedge (p.\,metadata.\,namespace =$$

$$ns.\,metadata.\,name) \tag{6}$$

This relation is used, e.g., to check whether the namespace "def" contains the pod "debug". For this, Equ. 6 becomes *contains(def, debug) = Pod(debug) ∧ Namespace(def) ∧ (debug. metadata. namespace = def. metadata. name) = true ∧ true ∧ (def = def) = true.* Thus, the pod "debug" is contained in the namespace "def" (see Fig. 2). Checking whether the namespace "def" contains the pod "frontend" yields *contains(def, frontend) = Pod(frontend) ∧ Namespace (def) ∧ (frontend. metadata. namespace = def. metadata. name) = true ∧ true ∧ (app = def) = false.* Thus, the namespace "def" does not contain the pod "frontend". Let us check, whether the pod "frontend" in namespace "app" can reach the pod "debug" in namespace "def": For this Equ. 3 is used, reading *can-reach(frontend, debug) = is-active-pod(frontend) ∧ is-active-pod(debug) ∧ ¬(frontend = debug) ∧ (¬(selected-by-egress-policy(frontend) ∧ selected-by-ingress-policy(frontend)) v connection-allowed-by-network-policy(frontend, debug)).* As there is no network policy defined in Listing 2, the expressions selected-by-egress-policy, selected-by-ingress-policy, and connection-allowed-by-network-policy return a Boolean false value, such that can-reach(*frontend, debug*) = *true.* Hence, the pod "frontend" in the namespace "app" can reach the pod "debug" in the namespace "def" although they are contained in different namespaces (see Fig. 2). Note that containers are not shown in Fig. 2.

The same result is obtained by forming a matrix of all pods in the cluster, and since no network policy is defined, each source pod can reach all other pods in the cluster.

| | | Destination pods | | |
|---|---|---|---|---|
| | | debug | frontend | backend |
| Source pods | debug | ✓ | ✓ | ✓ |
| | frontend | ✓ | ✓ | ✓ |
| | backend | ✓ | ✓ | ✓ |

*Tab. 2 Configured connections for Listing 2*

In a third application example, a simple cluster with a simple Kubernetes network policy, in Kubernetes called networkPolicy, is investigated.

Network Policies are mechanisms to control the traffic flow in a Kubernetes cluster at the IP address or port level for TCP, UDP and SCTP protocols. Network policies are an application-centric construct which allow to specify how a pod is allowed to communicate with various network "entities". The pods targeted by a policy are referred to as subjects and other network entities are referred to as peers. Peers that a Pod can communicate with are identified through a combination of the following 3 identifiers:

other pods that are allowed (exception: a pod cannot block access to itself),
namespaces that are allowed, and
IP blocks (exception: traffic to and from the node where a Pod is running is always allowed, regardless of the IP address of the Pod or the node).

There are two sorts of isolation for a Pod: isolation for Egress, and isolation for Ingress. These types of isolation (or not) are declared independently and are both relevant for a connection from one pod to another. The general flow if the traffic to or from a Pod is restricted as follows:

if the Pod is not subject of any NetworkPolicy, then all connections are allowed for that pod,
unless restriction applies to the peer,
determine which traffic direction is configured based on the configured PolicyType:

if PolicyType contains Ingress or no PolicyType is defined, then the Pod is isolated for ingress traffic (i.e., no incoming traffic is allowed) and only traffic from peers specified via IngressRules is allowed;
if PolicyType contains Egress, then the Pod is isolated for egress (i.e. no outgoing traffic is allowed), and only traffic to peers specified via EgressRules is allowed.

Generally, the effect of all IngressRules and all EgressRules are combined additively across all NetworkPolicies defined in the cluster.

The manifest for this application example comprises three files, namely Listings 3-5:

```
apiVersion: v1
 kind: Namespace
 metadata:
  name: app
  ---
  apiVersion: v1
  kind: Pod
  metadata:
  name: frontend
  namespace: app
  labels:
   role: frontend
  spec:
  containers:
 - name: server
   image: nginx:latest
   ---
   apiVersion: v1
   kind: Pod
   metadata:
  name: backend
```

```
  namespace: app
  labels:
    role: backend
    spec:
  containers:
 - name: api
    image: api:latest
```

*Listing 3: First manifest for third application example*

```
 apiVersion: v1
 kind: Pod
 metadata:
  name: client
  namespace: default
  labels:
    role: frontend
    spec:
  containers:
 - name: client
    image: client:latest
    ---
    apiVersion: v1
    kind: Pod
    metadata:
  name: other
  namespace: default
  labels:
    role: backend
    spec:
  containers:
 - name: other
    image: app:latest
```

*Listing 4: Second manifest for third application example*

```
apiVersion: networking.k8s.io/v1
  kind: NetworkPolicy
 metadata:
  name: default-deny-all
  namespace: app
  spec:
  podSelector: {}
  policyTypes:
 - Ingress
 - Egress
  ingress: []
```

*Listing 5: Third manifest for third application example*

By text parsing the manifest, four pods, namely the pods "frontend", "backend", "client" and "other", one explicitly declared namespace "app" and one implicitly used namespace "default", and one network policy "default-deny-all" are identified. The pods "frontend" and "backend" are contained in the namespace "app", whereas the pods "client" and "other" are contained in the namespace "default". Note that although the manifest does not explicitly declare the "default" namespace, this namespace exists by default. Without considering the network policy contained in Listing 5, all pods would be able to communicate to each other (see Tab. 3 below).

| Destination pods | | | | | |
|---|---|---|---|---|---|
| | | frontend | backend | client | other |
| Source pods | frontend | ✓ | ✓ | ✓ | ✓ |
| | backend | ✓ | ✓ | ✓ | ✓ |
| | client | ✓ | ✓ | ✓ | ✓ |
| | other | ✓ | ✓ | ✓ | ✓ |

*Tab. 3 Intermediate result for third application example*

Analyzing the network policy, however, changes the allowed connections in the Kubernetes cluster considerably. In a first step, the subject or the subjects (in case of more than one subject) of the network policy are identified.

In the present case, the subjects are the pods "frontend" and "backend" contained in the namespace "app" (see key default-deny-all.metadata.namespace). The pods contained in the namespace "app" are given by Equ. 6, e.g., $contains(app, frontend) = Pod(frontend) \wedge Namespace(app) \wedge (frontend. metadata. namespace = app. metadata. name) = true \wedge true \wedge (def = def) = true$. Thus, the pod "frontend" is contained in the namespace "app". Likewise, backend is contained in "app", however, the pods "client" and "other" are not contained in "app".

In addition, individual pods can be selected by specifying them explicitly using the podSelector (see key default-deny-all.spec.podSelector). In Listing 5, the podSelector is "{}" thus all pods in the namespace "app" are selected as subjects. In other words, pods "frontend" and "backend" are subject pods, whereas the other pods are not subject pods. Formally, for empty pod selectors the following relation yields the same result:

$$\sigma_{NP_{all}} (np, pod) = NetworkPolicy(np) \wedge Pod (pod) \wedge np. metadata. namespace = pod. metadata. namespace \wedge np. spec. podSelector = \emptyset \tag{7}$$

Applying Equ. 7 to the network policy "default-deny-all" and the pod "frontend" yields $\sigma_{NP_{all}}$(default-deny-all,frontend) = $NetworkPolicy$(default-deny-all) $\wedge Pod$(frontend) $\wedge$ default-deny-all. $metadata. namespace$ = frontend. $metadata. namespace \wedge$ (default-deny-all. $spec. podSelector = \emptyset$) = $true \wedge true \wedge true \wedge true = true$. Thus, the pod "frontend" is a subject of the network policy. The same holds true for the pod "backend" (subjects are printed bold in Tab. 4 below).

As the network policy "default-deny-all" specifies both "Ingress" and "Egress" policy types, incoming traffic from other pods to the subjects and outgoing traffic to other pods from the subjects are disallowed. Thus, the allowed connections are:

| Destination pods | | | | | |
|---|---|---|---|---|---|
| | | **frontend** | **backend** | client | other |
| Source pods | **frontend** | ✓ | X | X | X |
| | **backend** | X | ✓ | X | X |
| | client | X | X | ✓ | ✓ |
| | other | X | X | ✓ | ✓ |

*Tab. 4 Configured connections for third application example*

In other words, each of the subject pods can communicate internally, i.e. containers held by the same pod can communicate with each other, however, cannot communicate with other pods. On the other hand, the other pods "other" and "client" can communicate with each other in both directions (see Fig. 3). That the pods "client" and "other" are able to communicate to each other can be inferred from Equ. 6 can-reach(*client, other*) and can-reach(*other, client*). E.g., evaluating can-reach(*other, client*) yields

can-reach(*other, client*) = is-active-pod(other) $\Lambda$ is-active-pod(*client*) $\Lambda$ ¬(*other = dst*) $\Lambda$ (¬(selected-by-egress-policy(*other*) $\Lambda$ selected-by-ingress-policy(*other*)) v connection-allowed-by-network-policy(*other, client*)) = true $\Lambda$ *true* A *true* $\Lambda$ (¬(false $\Lambda$ *false*) v false) = *true*. Thus, "other" can reach "client" and vice versa.

The rules *selected-by-ingress-policy*(*np, pod*) and *selected-by-egress-policy*(*np, pod*) for a network policy "np" and a pod "pod", respectively, are defined as follows: selected-by-ingress-policy(*np, pod*) = NetworkPolicy(*np*) $\Lambda$ *Pod*(*pod*) $\Lambda$

$$(¬(\exists np.\ spec.\ policyTypes) \lor \text{"Ingress"} \in np.\ spec.\ policyTypes) \Lambda \sigma_{label}\ (np.\ spec.\ podSelector,\ pod) \tag{8}$$

$$\text{selected-by-egress-policy}(np,\ pod) = \text{NetworkPolicy}(np) \Lambda Pod(pod) \Lambda \text{"Egress"} \in np.\ spec.\ policyTypes)) \Lambda$$
$$\sigma_{label}\ (np.\ spec.\ podSelector,\ pod) \tag{9}$$

The general rule for pod selection is given by

$$\sigma_{label}(x, y) = x.\,matchLabels \subseteq y.\,metadata.\,labels \tag{10}$$

Furthermore, the general rule *connection-allowed-by-network-policy* between a source pod "src" and destination pod "dst" in respect to a network policy "np" is defined as

$$\text{connection-allowed-by-network-policy}(src,\ dst) = \text{is-active-pod}(src) \text{ A is-active-pod}(dst) \Lambda ¬(src = dst) \Lambda (¬(\text{se-lected-by-egress-policy}(np,\ src)) \lor \text{egress-permission}(src,\ dst)) \Lambda (¬(\text{selected-by-ingress-policy}(np,\ dst)) \lor \text{in-gress-permission}(src,\ dst)) \Lambda \nexists\ port\text{-}restriction(src,\ dst,\ port) \tag{11}$$

In a fourth application example, an ineffective network policy is discussed briefly. In addition to Listings 3 and 4, the network policy given in Listing 6 is used:

```
apiVersion: networking.k8s.io/v1
 kind: NetworkPolicy
 metadata:
      name: empty-peer-list
      namespace: app
      spec:
      podSelector: {}
      policyTypes:
              - Ingress
              - Egress
      ingress:
              - from: []
      egress:
              - to: []
```

*Listing 6 Third manifest for fourth application example*

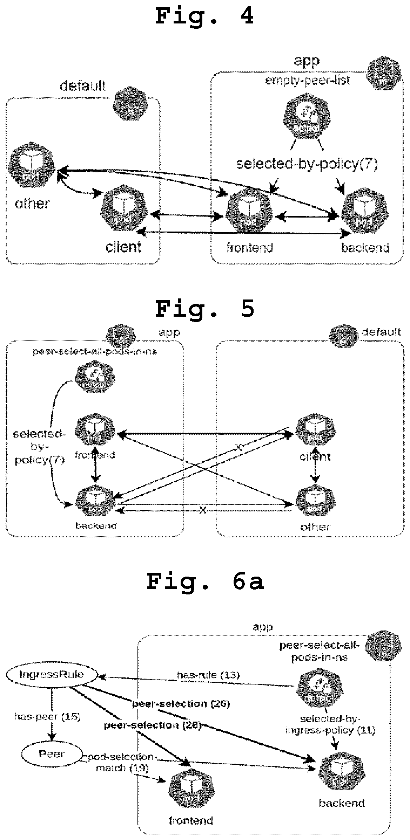

As the network policy "empty-peer-list" of Listing 6 defines the same namespace "app" and an empty podSelector as in Listing 5, the subject pods are identical to the third application example, i.e. the pods "frontend" and "backend" are subjects of the network policy "empty-peer-list", whereas "client'" and "other" aren't. Also the policyTypes are identical to Listing 5, however, the network policy contains the Ingress rule "- from: []" and the Egress rule "- to: []". These allowed connections have the effect that all ingoing connections, irrespective of namespace, to the subjects and all outgoing connections from the subjects are allowed. Thus, the network policy has no effect (see Fig. 4). In summary, the connections allowed in the cluster specified by Listings 3, 4 and 6 are the same as given in Tab. 3 above.

In a fifth application example, a cluster with another network policy "peer-select-all-pods-in-ns" is analyzed. In addition to Listings 3 and 4, the network policy specified in Listing 7 is used:

```
apiVersion: networking.k8s.io/v1
  kind: NetworkPolicy
  metadata:
   name: peer-select-all-pods-in-ns
   namespace: app
   spec:
```

```
podSelector:
 matchLabels:
    role: backend
policyTypes:
 - Ingress
ingress:
 - from:
    - podSelector: {}
```

*Listing 7 Third manifest for fifth application example*

The allowed connections in the cluster disregarding network policies are given in Tab. 3 above.

A NetworkPolicy controls the communication of specific pods to/from other systems called peers. These peers are configured using one or more NetworkPolicyRules. Depending on the direction of the configured connection, this is either an IngressRule or an EgressRule. These rules are linked to the NetworkPolicy via the has-rule relationship. Equ. 13 defines this relationship for IngressRules and Equ. 14 for EgressRules:

$$\text{has-rule}(np, rule) = \text{NetworkPolicy}(np) \land \exists np.\ spec.\ ingress \land \forall rule \in np.spec.ingress(IngressRule(rule)) \qquad (13)$$

$$\text{has-rule}(np, rule) = \text{NetworkPolicy}(np) \land \exists np.\ spec.\ egress \land \forall rule \in np.\ spec.\ egress(EgressRule(rule)) \qquad (14)$$

In each rule the allowed list of ports and list of peers can be configured. Peers are defined via the "from" property in the case of an IngressRule and via the "to" property for an EgressRule. Either a single rule or a list of rules (in a YAML file separated by "-") can be specified. A peer acts as a proxy for a group of other systems (i.e. pods or nodes), which are allowed to send to a pod or receive traffic from a pod (for ingress/egress rules, respectively).

There are four kinds of selectors for a peer: podSelector, namespaceSelector, podSelector and namespaceSelector, and ipBlock.

By default, if only a podSelector is defined, then all the pods in the same namespace as the NetworkPolicy are selected for this rule. If only the namespaceSelector is defined (and no podSelector) then all pods from the matched namespaces are selected. If both the namespaceSelector and the podSelector are defined, then only pods matching both the selected namespace and the podSelector are selected for this rule. Another variant using ipBlock allowing to discriminate IP addresses and address ranges is possible in Kubernetes, however, this variant is not discussed in this document.

Rules 15 and 16 describe whether an Ingress or Egress rule in a network policy has a corresponding peer. These rules are defined as:

$$\text{has-peer}(rule, peer) = IngressRule(rule) \land \forall peer \in rule.from(\text{NetworkPolicyPeer}(peer))$$

$$(15)$$

$$\text{has-peer}(rule, peer) = EgressRule(rule) \land \forall peer \in rule.to(\text{NetworkPolicyPeer}(peer))$$

$$(16)$$

An exception to the general flow described above is when a peer list is present but is empty. For an IngressRule this means from is an empty list and for an EgressRule to is an empty list. If a rule has no peers defined this implicitly targets all systems within the cluster as the communication peers.

$$\text{pod-selection-match}(rule, pod) = \text{NetworkPolicyRule}(rule) \land \exists has\text{-}peer(rule, peer) \land \text{NetworkPeer}(peer) \land \forall pod(Pod(pod)) \qquad (17)$$

A peer with a present but empty podSelector, such as stated in Listing 7, selects all pods within the same namespace. Fig. 5 shows the graph resulting from applying rule Equ. 18 to the resources configured in Listing 7.

$$\text{pod-selection-match}(peer, pod) = NetworkPeer(peer) \land NetworkPolicy(np) \land has\text{-}rule(np, rule) \land NetworkPolicyRule(rule) \land has\text{-}peer(rule, peer) \land \exists peer.\ podSelector \land peer.\ podSelector = \varnothing \land \forall pod(Pod(pod) \land pod.\ metadata.\ namespace = np.\ metadata.\ namespace) \qquad (18)$$

The network policy "peer-select-all-pods-in-ns" applies to the namespace "app". However, instead of selecting all pods in the namespace, pods are selected according to the role-label. The only pod in the namespace "app" having the role "backend" is the pod "backend". The pod "backend" is thus the subject of the network policy. The network policy specifies only "Ingress" as policyTypes, thus, only ingress traffic to the subject is limited. The key peer-select-all-pods-in-ns.spec.ingress specifies a single Ingress rule "from: podSelector: {}", thus ingoing network traffic to the subject "backend" is allowed from all pods in the same namespace. Consequently, traffic from the pod "frontend" to the subject pod "backend" is allowed, however, traffic from the pods "client" and "other" in the namespace "default" is disallowed. In summary, connections specified in Tab. 5 are allowed (see also Fig. 5, where disallowed connections are shown with an X).

| | | Destination pods | | | |
|---|---|---|---|---|---|
| | | frontend | **backend** | client | other |
| Source pods | frontend | ✓ | ✓ | ✓ | ✓ |
| | **backend** | ✓ | ✓ | ✓ | ✓ |
| | client | ✓ | X | ✓ | ✓ |
| | other | ✓ | X | ✓ | ✓ |

*Tab. 5 Configured connections for fifth application example*

In a sixth application example, a cluster with another network policy "client- can-reach-backend" is analyzed. In addition to Listings 3 and 4, the network policy of Listing 8 is used:

```
apiVersion: networking.k8s.io/v1
 kind: NetworkPolicy
 metadata:
  name: client-can-reach-backend
  namespace: app
  spec:
  podSelector:
   matchLabels:
     role: backend
  policyTypes:
   - Ingress
  ingress:
   - from:
     - namespaceSelector:
        matchLabels:
          kubernetes.io/metadata.name: default
       podSelector:
        matchLabels:
          role: frontend
```

*Listing 8 Third manifest for sixth application example*

The network policy "client-can-reach-backend" applies to the namespace "app", which - according to Listing 3 - comprises two pods, namely "frontend" and "backend". The podSelector specifies that the subject pod matches the label "backend". The only pod in the namespace "app" having the label "backend" is the pod "backend". Thus, "backend" is the subject of the network policy. As in the fifth example, the network policy specifies "Ingress" as policyTypes only. The selection of rules (in this case, an Ingress rule), peers etc. by logical reasoning is described in some level of detail.

Equ. 13 and 14 are used to identify Ingress and Egress rules in the network policy. For ingress rules Equ. 13 is used, identifying the ingress rule stated in the last 7 lines of the network policy, i.e. "from: .... role: frontend". Equ. 14, on the other hand, does not deliver any egress rule. As a single ingress rule was identified, Equ. 15 is used to identify the peer for this rule. Equ. 15 delivers the last 6 lines of the network policy, i.e. "namespaceSelector: .... role: frontend". The peers itself are identified by Equ. 19:

pod-selection-match(*peer*, *pod*) = NetworkPeer(*peer*) $\wedge$ $\exists$*peer. podSelector* $\wedge$ $\forall$*pod*(*Pod*(*pod*) $\wedge$ $\sigma_{label}$ (*peer, pod*)) (19)

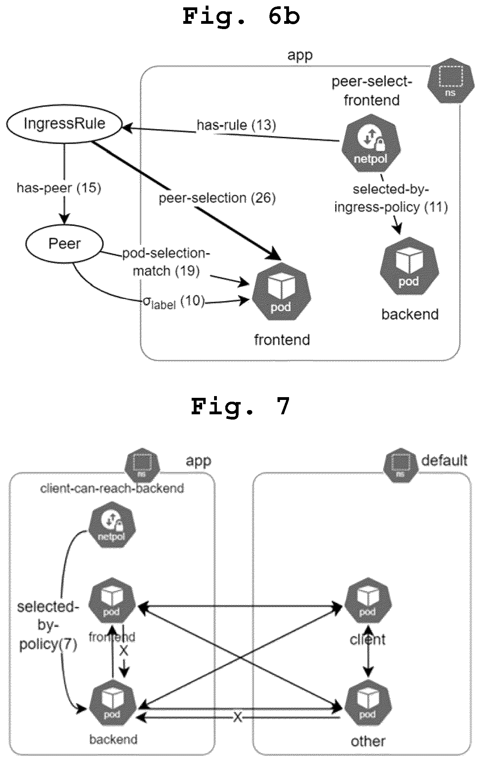

To restrict the number of peers more granularly, the podSelector can use the label-selection mechanism defined in Equ. 10. This is modeled in Equ. 19. When applying this rule to Listing 8, only the frontend pod with the corresponding label is selected as peer and consequently allowed by the NetworkPolicy. Figures 6a, 6b schematically show how peer selection is done using the rules given above. Fig. 7 shows the allowed connections for listings 3, 4 and 8, where disallowed connections are shown with an X.

The allowed connections for the sixth application example are summarized in Tab. 6:

| | | Destination pods | | | |
|---|---|---|---|---|---|
| | | frontend | **backend** | client | other |
| **Source pods** | frontend | ✓ | X | ✓ | ✓ |
| | **backend** | ✓ | ✓ | ✓ | ✓ |
| | client | ✓ | ✓ | ✓ | ✓ |
| | other | ✓ | X | ✓ | ✓ |

*Tab. 6 Configured connections for sixth application example*

In the third, fourth and fifth application examples the effect of network policies was demonstrated. Whereas according to the very stringent network policy in Listing 5, only network communication between the pods client and other was allowed and consequently the pods frontend and backend could not be reached from other pods at all (see Fig. 3), the network policy in Listing 6 proved totally ineffective because of allowing all network communication between pods (see Fig. 4). Compared to these scenarios, the network policy according to Listing 7 restricted some communication from the namespace default and app (see Fig. 5), and the network policy according to Listing 8 restricted some communication from the namespaces default and app and inter-pod communication from frontend to backend (see Fig. 6). Although a reference communication relationship was not explicitly stated in the third and fifth application examples, these examples demonstrate the effect of changing the communication relationship between pods in a distributed computing environment by changing the manifest such that the communication relationship between a given pod and another pod for the changed manifest is in conformity with the reference communication relationship between the given pod and the another pod.

In a seventh application example the effect of services on the network topology is explained. For that, the following manifest is used:

```
apiVersion: v1
 kind: Pod
 metadata:
 name: frontend
 namespace: default
 labels:
  app.kubernetes.io/name: frontend
  spec:
 containers:
 - name: frontend
  image: nginx:latest
  ports:
  - containerPort: 3000
    protocol: TCP
    ---
    apiVersion: v1
    kind: Service
    metadata:
 name: frontend
 namespace: default
 spec:
 ports:
 - node Port: 30111
  port: 80
  protocol: TCP
  targetPort: 3000
 selector:
  app.kubernetes.io/name: frontend
  type: NodePort
```

*Listing 9 Manifest for 7th application example*

Generally, several ways exist to expose workloads within the cluster and to the outside. Native to Kubernetes are these three major mechanisms: Service, Ingress and exposing Pods directly.

Service: The most common way is to use a Service to provide a stable endpoint to the dynamic workloads. As specified by Equ. 20, a Service is a sub-type of the more generic K8sResource:

$$Service \sqsubseteq K8sResource \tag{20}$$

A service can have one of four distinct types: ClusterIP (default), NodePort, LoadBalancer and ExternalName - all of which have a different scope and mechanism for the exposure. A service is not a real object in the cluster, instead it is a routing rule on every host system. By default, this is done by the kube-proxy process on every node. However, depending on the used Container Network Interface (CNI), the implementation may vary. Thus, in the following a service will be not placed on the cluster-nodes. The default service routing behavior is described by Equ. 21. ExternalName is excluded from this default behavior, as it is basically a DNS alias for an URL outside of the cluster.

routes-to(*suc*, *pod*) = *Service*(*svc*) ∧ *Pod*(*p*) ∧ *svc. spec. selector* ⊆ *pod. metadata. labels* ∧ (∃*svc. spec. serviceType* ∨ (*svc. spec. serviceType = "ClusterIP"* ∧ *svc. spec. clusterIP* ≠ *None*) ∨ *svc. spec. serviceType* ∈ {*"NodePort", "LoadBalancer"*}) $\qquad$ (21)

ClusterIP: ClusterIP is the default serviceType which exposes the service only a cluster-internal IP address. Thus, no additional effects apply other than the default behavior described by Equ. 21. A special case is a headless service which is when the ClusterIP is set to None, which is an explicit exception in that equation. A headless service does not perform any load-balancing and only implements DNS Service Discovery, based on the Kubernetes DNS Spec.

NodePort: A specified nodePort on a service will be opened for all nodes in the cluster. If no nodePort is specified in the ports list but the service is of type NodePort, then a port will be allocated from the service-node-port-range (default 30000-32767). This allocation cannot be inferred purely from the manifest since after deployment, the Service will have its node Port value set to the allocated port number. The lifecycle of the port on the cluster node is tied to the lifecycle of the service. This means, when the service will be deleted, the ports and routes are also removed.

has-port(*node*, *port*) = ∀(*Node*(*node*)) ∧ *Service*(*svc*) ∧ *svc. spec. type = NodePort* ∧ has-port(*svc*, *svc - port*) ∧ *ServicePort*(*svc-port*) ∧ ∃*svc-port. nodePort* ∧ *Port*(*port,* svc-port. *nodePort,* svc-port. *protocol*) $\qquad$ (22)

routes-to(*node*, src-port, *svc*, dst-port) = *Node*(*node*) ∧ *Service*(*svc*) ∧ *svc. spec. type "NodePort"* ∧ has-port (*svc*, dst-port) $\qquad$ (23)

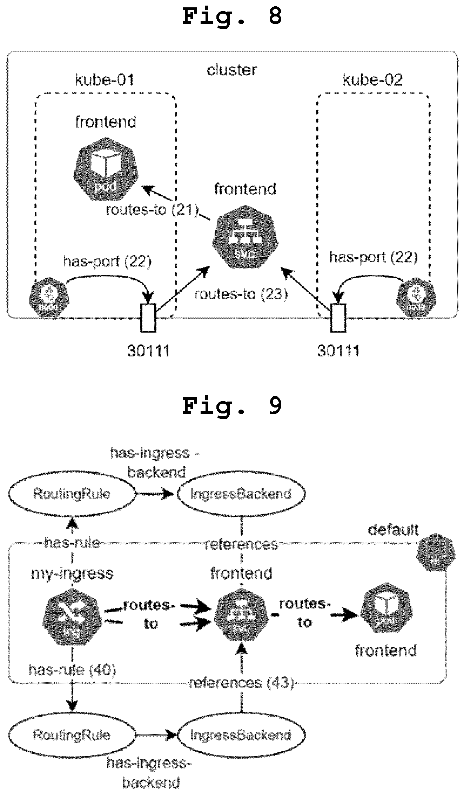

The nodePorts 30111 for Listing 9 are shown in Fig. 8.

LoadBalancer: A service of type LoadBalancer is from a Kubernetes point of view very similar to a NodePort service as it exposes a node Port on every node in the cluster. In addition, it expects to receive a cluster-external IP address via an external LoadBalancer provided by a Cloud Service Provider (CSP). Once an external IP address is assigned, it is stored in the status object of the service. This external LoadBalancer is responsible for forwarding traffic to the node Port one of the available nodes. Then, the NodePort behavior previously described continues.

In order to discuss the relationship between ingress, service, and pods, Listing 10 will be dis- cussed:

```
apiVersion: networking.k8s.io/v1
 kind: Ingress
 metadata:
 name: my-ingress
 namespace: app
 spec:
 defaultBackend:
  service:
   name: frontend
   port:
     name: error-port
 rules:
 - http:
  paths:
   path: "/ui"
```

```
backend:
   service:
    name: frontend
    port:
     number: 80
     ---
     apiVersion: v1
     kind: Service
     metadata:
  name: frontend
  namespace: app
  spec:
  type: ClusterIP
  selector:
   app.kubernetes.io/name: frontend
  ports:
  - port: 80
   protocol: TCP
   targetPort: 3000
  - port: 8080
   name: error-port
   protocol: TCP
   targetPort: 8080
   Listing 10
```

Ingress: For exposing workloads to the outside of a cluster an Ingress is commonly used. An ingress defines zero or more RoutingRules, which forwards ingress traffic from the outside to the designated IngressBackend, which is either a service for workloads or another Kubernetes resource in the same namespace. The backend is essentially just a proxy for the referenced service or resource. A fallback backend may be specified with the DefaultBackend, in case no RoutingRule applies for a request. Fig. 9 shows the general relationship between an Ingress object, the defined rules and backends, the referenced service, and the resulting routes. Note: The actual implementation of the backends is part of the implementation of an Ingress Controller. As an Ingress Controller is not a Kubernetes-native resource and cloud-specific, this is outside the scope of this disclosure. Only the basic referencing to the resource is modeled via rules, but no specific examples are provided.

Routing Rules: Every rule consists of three parts: an optional host, a list of paths and a backend for a specific path. For every rule and all its paths, a dedicated RoutingRule is created, which has the relation has-ingress-backend. The respective backend type is specified as a sub-object in the rule (see lines 12-15 in Listing 10). If no rules are specified, a default-Backend must be specified. If none of the hosts and/or paths match the HTTP request in the rules, the traffic is routed to this defaultBackend. Routing decision is based on the optional host property. If this is set, the rule applies only to requests to this host. However, this disclosure does not consider a specific routing decision, but models only the possible routes with the routes-to relation.

$$\text{has-rule}(ing, rule) = Ingress(ing) \land \forall rule \in ing.spec.rules(RoutingRule(rule))$$

$$(25)$$

Backend: There exist different backend types, which are a subtype of the generic

IngressBackend. This is subtype relationship is denoted with the = symbol.

IngressServiceBackend: Equ. 26 defines the IngressServiceBackend and Equ. 29 defines the IngressResource-Backend. Any relation involving the generic IngressBackend also applies to these subtypes.

$$\text{IngressServiceBackend} \sqsubseteq \text{IngressBackend} \qquad (26)$$

$$\text{has-ingress-backend}(rule, be) = RoutingRule(rule) \land \forall be \in rule.http.paths(IngressServiceBackend(be.service \Leftrightarrow \exists be.service \qquad (27)$$

$$\text{references}(be, svc) = IngressServiceBackend(be) \land Service(svc) \land Service(svc) \land svc.metadata.name = be.name \land svc.metadata.namespace = ing.metadata.namespace \qquad (28)$$

16

IngresResourceBackend: The following three equations are equivalent to the rules presented right above, except for resource backends.

$$\text{IngressResourceBackend} \sqsubseteq \text{IngressBackend} \qquad (29)$$

has-ingress-backend(*rule*, *be*) = RoutingRule(*rule*) $\land$ $\forall be \in rule.http$.paths(IngressResourceBackend(*be.resource*) $\Leftrightarrow \exists be. resource$)(30) $\qquad (30)$

refernces(be, *res*) = *IngressResourceBackend* (*be*) $\land$ *Resource*(*res*) $\land$ *res. metadata. name = be.name* $\land$ *res. metadata. kind = be.kind* $\land$ *res. metadata. apiGroup = be. apiGroup* $\land$ *res. metadata. namespace = ing. metadata. namespace* $\qquad (31)$

<u>Default Backend:</u> In the proposed model, a default backend is treated the same way as any other Ingress routing rule. Thus, a synthetic RoutingRule is generated in Equ. 32. However, to keep the semantics, a special subtype for the RoutingRule is introduced as
*DefaultRoutingRule* $\sqsubseteq$ *RoutingRule.*

has-rule(*ing, rule*) = *Ingress*(*ing*) $\land$ $\exists ing. spec. defaultBackend$ $\land$ DefaultRoutingRule(*ing. spec. defaultBackend*) $\qquad (32)$

For the corresponding default IngressServiceBackend and/or IngressResourceBackend, equations 33 and 34 are introduced respectively to establish the has-ingress-backend relation. Equations 27 and 30 are not applicable, because for defined RoutingRules in the ingress multiple backends can be defined, but for the default-Backend there can exist only one. With this, all other rules work as previously explained.

has-ingress-backend(*rule*, *be*) = *DefaultRoutingRule*(*rule*) $\land$ $\exists rule. service$ $\land$ *IngressResourceBackend*(*rule. service*) $\qquad (33)$

has-ingress-backend(*rule*, *be*) = *DefaultRoutingRule*(*rule*) $\land$ $\exists rule. resource$ $\land$ *IngressResourceBackend*(*rule. resource*) $\qquad (34)$

<u>Final Routing and Reachability Relations:</u> With the established relations of has-ingress-backend and their respective references the final route created by the Ingress can be inferred. As established by Equation 20 is a Service a specialization of a K8sResource. This in conjunction with equations 26 and 29 enables the generic rule Equ. 35 to apply to all types of backends and create the resulting routes-to relationship. For these relationships the routing decision (based on path or defaultBackend) is not relevant.

routes-to(*ing*, *res*) = *Ingress*(*ing*) $\land$ has-rule(*ing, rule*) $\land$ *RoutingRule*(*rule*) $\land$ has-ingress-backend(*rule, be, path*) $\land$ *IngressBackend* (*be*) $\land$ *references*(*be, res*) $\land$ *K8sResource(res)* $\qquad (35)$

Listing 10 is a definition for an Ingress and a Service in the app namespace for the frontend pod defined in Listing 3. Figure 9 visualizes the relations resulting from this configuration. The ingress defines two routes. One defaultBackend (lines 7-11) where any unmatched request is forwarded to the error-port on the frontend service. Equation 32 infers the relation has-rule and Equation 33 establishes the relation has-ingress-backend. These two relations form the "top path" in Figure 9.

The "bottom path" is the result of the RoutingRule defined in lines 13-20. If a HTTP request has the path /ui a RoutingRule is defined to forward the request to port 80 on the same service. This is captured by Equation 25. In turn, Equation 30 infers the relationship between IngressServiceBackend in the defined RoutingRule to the service.

Both backends use Equation 28 to establish the relation to the targeted service. Equation 35 creates a routes-to relation between the Ingress and the Service for every previously explained 'path'.

Equation 26 is a special rule to make the reachability to the services targeted by the Ingress explicit. The any variable is merely a placeholder for any request originating from outside the Kubernetes cluster.

$$can-reach(any, svc) = Service(svc) \wedge Public(any) \wedge Ingress(ing) \wedge \text{routes-to}(ing, svc)$$

$$(36)$$

Container Ports: Transitive relation of ports, which are exposed in a container are consequently also exposed its pod, as described by Equ. 40.

$$\text{has-port}(pod, port) = Pod(pod) \wedge Container(c) \wedge holds(pod, c) \wedge has-port(c, port)$$

$$(40)$$

$routes\text{-}to(node, pod) = Pod(pod) \wedge \text{has-port}(pod, port) \wedge Node(node) \wedge \text{has-port}(node, nodeport) \wedge \text{runs-on}(pod, node) \wedge port. containerPort = nodeport$ (41)

A hostPort in a container opens the respective port on the underlying cluster node. This behavior is subject to scheduling of pods on the nodes, as statically defined ports may already be occupied on certain nodes. HostPorts are well known, however, will not be discussed in this disclosure.

$\text{has-port}(node, port) = Container(c) \wedge has\text{-}port(c, port) \wedge Node(node) \wedge runs\text{-}on(pod, node) \wedge Pod(pod) \wedge holds(pod, c)$ (42)

$\text{routes-to}(node, \text{src-port}, svc, \text{dst-port}) = Node(node) \wedge Service(svc) \wedge svc. spec. type = "NodePort" \wedge \text{has-port}(svc, \text{dst-port})$ (43)

A pod with the hostNetwork flag set becomes identical with its underlying node from the network perspective, as described by Equ. 44. This in turn means that every system that can be reached by a cluster node can also be reached by this pod, disregarding NetworkPolicies.

$\text{can-reach}(pod, dst) = Pod(pod) \wedge pod. spec. hostNetwork = true \wedge Node(node) \wedge \text{runs-on}(pod, node) \wedge \text{can-reach}(node, dst) \wedge \neg(src = dst)$ (44)

Node communication: 1. Pod-Node communication:

$\text{runs-on}(pod, node) = Pod(pod) \wedge Node(node) \wedge pod. spec. nodeName = node. metadata. name$ (45)

Every cluster node must be able to reach all pods running on it, to be able to manage its lifecycle. As such, this form of reachability described by Equation 46 cannot be restricted with a NetworkPolicy.

$$\text{can-reach}(pod, node) = \text{runs-on}(pod, node) \wedge \text{is-active-pod}(p) \qquad (46)$$

2. Node-Node communication: All nodes in a cluster can reach each other. There is no Kubernetes-native way to configure this connectivity.

$$\text{can-reach}(m, n) = Node(m) \wedge Node(n) \wedge \neg(m = n) \qquad (47)$$

The disclosure presents a concept for the evaluation of Kubernetes clusters by logical reasoning. The presented methodology as well as the presented rules/equations are independent of the actual Kubernetes cluster to be analyzed and are thus universally applicable. The analysis of a cluster can be performed by evaluating the rules one after the another, or by a so-called "logical reasoning engine", which iteratively evaluates the rules based on the manifest and by doing so, generates new relations and facts. The evaluation results can be stored in a facts database.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

**Claims**

1.   A computer-implemented method for deploying software in a distributed computing environment, comprising:

- receiving, by a computer processor, a manifest from a container orchestration system, where the manifest describes a portion of network topology in the distributed computing environment;
- extracting, by the computer processor, pods enumerated in the manifest, where a pod specifies a container or group of containers in the network topology;
- for a given pod in the manifest, determining, by the computer processor, whether the given pod is able to communicate with another pod in the manifest, thereby defining a communication relationship between the given pod and the another pod;
- logging, by the computer processor, the communication relationship between the given pod and the another pod in a data store; and
- displaying, by the computer processor, the communication relationship between the given pod and the another pod, on a display device.

2.   The method of claim 1, further comprising extracting pods enumerated in the manifest by text parsing the manifest.

3.   The method of claim 1 or 2, wherein data in the manifest is formatted in accordance with a human-readable data serialization language.

4. The method of any one of the preceding claims, further comprising determining whether the given pod is able to communicate with another pod by enumerating each pair of pods extracted from the manifest and applying a predefined rule to each of the pair of pods.

5. The method of any one of the preceding claims, further comprising extracting namespaces enumerated in the manifest by text parsing the manifest.

6. The method of any one of the preceding claims, further comprising extracting network policies enumerated in the manifest by text parsing the manifest, where a network policy specifies traffic flow between entities in the network topology.

7. The method of claim 6, further comprising, for a given network policy, modifying the communication relationship between the given pod and the another pod in accordance with the given network policy.

8. The method of claim 7, wherein the given network policy specifies at least one of a given network entity cannot send network traffic or the given network entity cannot receive network traffic.

9. The method of claim 7 or 8, wherein the given network policy specifies at least one of a given network entity can send network traffic or the given network entity can receive network traffic.

10. The method of any one of the preceding claims, further comprising displaying, by the computer processor, a graphical representation of the portion of the network topology described in the manifest.

11. The method of any one of the preceding claims, further comprising comparing, by the computer processor, the determined communication relationship between the given pod and the another pod to a reference communication relationship between the given pod and the another pod, and changing the manifest based on the comparison of the determined communication relationship between the given pod and the another pod to the reference communication relationship between the given pod and the another pod, such that the communication relationship between the given pod and the another pod for the changed manifest is in conformity with the reference communication relationship between the given pod and the another pod.

12. A non-transitory computer-readable medium having computer-executable instructions that, upon execution of the instructions by a processor of a computer, cause the computer to:

   - receive a manifest from a container orchestration system, where the manifest describes a portion of network topology in the distributed computing environment;
   - extract pods enumerated in the manifest, where a pod specifies a container or group of containers in the network topology;
   - for a given pod in the manifest, determine whether the given pod is able to communicate with another pod in the manifest, thereby defining a communication relationship between the given pod and the another pod;
   - log the communication relationship between the given pod and the another pod in a data store; and
   - display the communication relationship between the given pod and the another pod, on a display device.

13. The non-transitory computer-readable medium of claim 12, wherein the computer-executable instructions further cause the computer to determine whether the given pod is able to communicate with another pod by enumerating each pair of pods extracted from the manifest and applying a predefined rule to each of the pair of pods.

14. The non-transitory computer-readable medium of claim 12 or 13, wherein the computer-executable instructions further cause the computer to extract network policies enumerated in the manifest by text parsing the manifest, where a network policy specifies traffic flow between entities in the network topology.

15. The non-transitory computer-readable medium of claim 14, wherein the computer-executable instructions further cause the computer to, for a given network policy, modify the communication relationship between the given pod and the another pod in accordance with the given network policy.

# Fig. 1a

# Fig. 1b

# Fig. 1d

# Fig. 1c

# Fig. 2

# Fig. 3

# Fig. 4

# Fig. 5

# Fig. 6a

# Fig. 6b

app

IngressRule

has-rule (13)

peer-select-frontend

ns

netpol

has-peer (15)

peer-selection (26)

selected-by-ingress-policy (11)

Peer

pod-selection-match (19)

$\sigma_{label}$ (10)

pod

frontend

pod

backend

# Fig. 7

app

default

client-can-reach-backend

netpol

selected-by-policy(7)

pod

frontend

X

pod

backend

pod

client

X

pod

other

# Fig. 8

# Fig. 9

Europäisches
Patentamt

European
Patent Office

Office européen
des brevets

# EUROPEAN SEARCH REPORT

Application Number

EP 25 16 4746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/179573 A1 (SOSNOVICH ADI [IL] ET AL) 8 June 2023 (2023-06-08)<br>* paragraph [0022] - paragraph [0024] *<br>* paragraph [0033] - paragraph [0039] *<br>* paragraph [0060] *<br>* figures 1, 3A, 4 * | 1-15 | INV.<br>G06F9/455<br>G06F8/60 |
| A | US 2021/328913 A1 (NAINAR NAGENDRA KUMAR [US] ET AL) 21 October 2021 (2021-10-21)<br>* paragraph [0028] - paragraph [0036] *<br>* paragraph [0044] - paragraph [0050] *<br>* figures 1, 2, 4 * | 1-15 | |
| A | EP 3 934 170 A1 (JUNIPER NETWORKS INC [US]) 5 January 2022 (2022-01-05)<br>* paragraph [0214] - paragraph [0287] *<br>* figures 9A-9D, 10, 11 * | 1-15 | |
| A | US 2023/107891 A1 (MIRIYALA PRASAD [US] ET AL) 6 April 2023 (2023-04-06)<br>* paragraph [0317] - paragraph [0347] *<br>* figures 10A-10M * | 1-15 | TECHNICAL FIELDS SEARCHED (IPC)<br><br>G06F |
| A | BUFALINO JACOPO ET AL: "Analyzing Microservice Connectivity with Kubesonde", 29TH ACM SYMPOSIUM ON VIRTUAL REALITY SOFTWARE AND TECHNOLOGY, ACMPUB27, NEW YORK, NY, USA,<br>30 November 2023 (2023-11-30), pages 2038-2043, XP059457038,<br>DOI: 10.1145/3611643.3613899<br>ISBN: 979-8-4007-0328-7<br>* abstract *<br>* page 2039, left-hand column, line 9 - page 2040, right-hand column, line 25 *<br>* figure 1 * | 1-15 | |

The present search report has been drawn up for all claims

| Place of search | Date of completion of the search | Examiner |
|---|---|---|
| Munich | 5 August 2025 | Eigner, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 4746

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2025

| Patent document cited in search report | Publication date | Patent family member(s) | | Publication date |
|---|---|---|---|---|
| US 2023179573 A1 | 08-06-2023 | NONE | | |
| US 2021328913 A1 | 21-10-2021 | NONE | | |
| EP 3934170 A1 | 05-01-2022 | CN | 113890826 A | 04-01-2022 |
| | | EP | 3934170 A1 | 05-01-2022 |
| | | US | 2022006701 A1 | 06-01-2022 |
| US 2023107891 A1 | 06-04-2023 | EP | 4413465 A1 | 14-08-2024 |
| | | US | 2023107891 A1 | 06-04-2023 |
| | | WO | 2023060025 A1 | 13-04-2023 |

EPO FORM P0459

For more details about this annex : see Official Journal of the European Patent Office, No. 12/82